# EUROPÄISCHE PATENTSCHRIFT

(11) **EP 0 805 932 B1**
(45) Veröffentlichungstag und Bekanntmachung des Hinweises auf die Patenterteilung: **10.01.2001**
(21) Anmeldenummer: 96939887.4
(22) Anmeldetag: 22.11.1996
(51) Int. Cl.: F16L 55/162

(54) **DICHTUNGSINNENMANSCHETTE ZUM EINSETZEN IN ROHRE**
LINER FOR INSERTION IN PIPES
MANCHETTE D'ETANCHEITE A INSTALLER DANS DES TUYAUX

(30) Priorität: 01.12.1995 DE 19544877
(43) Veröffentlichungstag der Anmeldung: 12.11.1997
(73) Patentinhaber: Uhrig Kanaltechnik GmbH, 78187 Geisingen (DE)
(72) Erfinder: GRAF, Eckhard, D-78073 Bad Dürrheim 4 (DE); GRAF, Jürgen, D-78073 Bad Dürrheim 4 (DE)
(74) Vertreter: Durm, Frank, Dipl.-Ing.
(86) Internationale Anmeldenummer: EP9605146
(87) Internationale Veröffentlichungsnummer: WO9721054

(56) Entgegenhaltungen:
- DE-A- 3 938 390
- DE-A- 4 401 318
- DE-U- 9 318 409
- DE-U- 9 417 247

## Beschreibung

Die Erfindung bezieht sich auf eine Dichtungsinnenmanschette zum Einsetzen in Rohre zwecks Abdichtung von Leckstellen, bestehend aus einem ringförmig zusammengebogenen, aufweitbaren Band aus Stahlblech, dessen Bandenden sich in Umfangsrichtung überlappen, mit wenigstens einer Arretierungsvorrichtung in Gestalt eines am innenliegenden Bandende in Umfangsrichtung angeordneten Schlitzes, dessen eine Längskante eine Zahnreihe trägt, und einem am außenliegenden Bandende drehbar gelagerten Spannritzel, welches in die Zahnreihe eingreift, sowie einem Rastorgan, das unter Einwirkung eines Federelements steht und in die Zahnung des Spannritzels eingreift.

Die Erfindung wird angewandt bei der Sanierung von Rohrleitungen. Mit Hilfe von Dichtungsinnenmanschetten können Undichtigkeitsstellen von unterirdisch verlegten Rohren aus Beton oder einem anderen Werkstoff ohne Grabarbeiten repariert werden.

Es ist bekannt, Leckstellen von Rohren vom Rohrinnern her abzudichten. Hierzu dienen spiralig zusammengebogene, gummiüberzogene und mit besonderen Dichtungsringen versehene Manschetten aus federelastischen, korrosionsbeständigem Stahlblech, welche in das zu dichtende Rohr bis zur Stelle der Undichtigkeit eingebracht werden. Dort werden sie mittels eines aufblasbaren Luftkissens oder einer mechanischen Montiereinrichtung so lange aufgeweitet, bis sie sich unter Zusammenpressen der Dichtungsringe sehr eng an die Rohrinnenwand angelegt haben. Eine Arretierungsvorrichtung, umfassend ein mit einer Zahnreihe kämmendes Ritzel und einen in dessen Zähne eingreifenden, federnden Sperriegel hält die Dichtungsmanschette in ihrer aufgeweiteten Stellung. Nachteilig ist jedoch hierbei, daß die erzielbaren Rastschritte des Ritzels aufgrund der vorgegebenen Ritzelzahnung so groß sind, daß - nach bis zur Grenzbelastung durchgeführter Aufweitung - sich der Umfang der Manschette zwangsläufig um bis zu einem ganzen Rastschritt wieder verkleinert, was die gewünschte Abdichtung und das Zusammendrücken der Dichtungen mangels festpressenden Anliegens an der Rohrinnenwand in Frage stellt (DE 44 01 318 A1, DE 93 18 409 U1).

Die Aufgabe der Erfindung besteht in der Konzeption einer Dichtungsinnenmanschette mit einer Arretierungsvorrichtung, welche sehr kleine Rastschritte gestattet und damit nach erfolgter Aufweitung ein festes, dauerhaftes Anliegen an der Rohrinnenwand bei hoher Preßwirkung auf die Dichtorgane gewährleistet.

Zur Lösung der gestellten Aufgabe wird von einer Dichtungsinnenmanschette der eingangs beschriebenen Bauart ausgegangen, und gelöst wird die Aufgabe durch die kennzeichnenden Merkmale des Patentanspruchs 1.

Mit Hilfe des unter der Einwirkung der Spannfeder stehenden, als Riegel wirkenden Sperritzel wird erreicht, daß nach erfolgtem Aufweiten die Spannung der Dichtungsinnenmanschette nach Einrasten des Sperriegels in das Spannritzel nahezu vollständig erhalten bleibt, was die Voraussetzung für ein ausgezeichnetes Abdichten der Leckstelle ist.

Vorteilhafte Ausgestaltungen des Erfindungsgegenstandes sind den Unteransprüchen 2 bis 5 zu entnehmen.

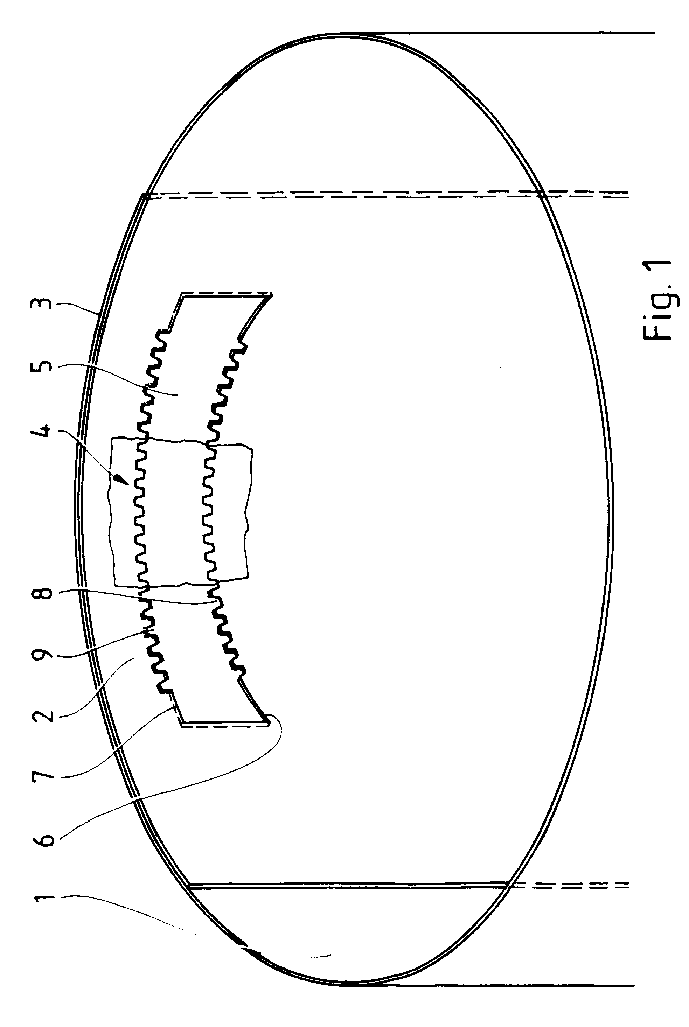

Die Erfindung wird nachstehend anhand der beiden beigefügten Zeichnungsblätter näher erläutert. Dabei zeigen
- Figur 1: eine Teilansicht einer Dichtungsinnenmanschette, perspektivisch dargestellt;
- Figur 2: einen Ausschnitt der Dichtungsmanschette nach Figur 1 mit der Arretierungsvorrichtung, in einer Draufsicht wie in Figur 1 angedeutet, in vergrößertem Maßstab.

Die dargestellte, zum Einsetzen in Rohre zum Abdichten von Leckstellen vorgesehene Dichtungsinnenmanschette 1 besteht aus einem federelastischen Material, vorzugsweise einem Blech aus nichtrostendem Stahl, und sie besitzt die Form eines ringförmig zusammengebogenen, mehr oder weniger breiten Bandes, dessen innenliegendes Bandende 2 vom außenliegenden Bandende 3 in Umfangsrichtung ein großes Stück überlappt wird. Diese Dichtungsmanschette 1 kann an der Leckstelle durch geeignete Vorrichtungen aufgeweitet werden, so daß sie an der Innenseite des zu dichtenden Rohres stramm anliegt.

Die Dichtungsinnenmanschette 1 ist zweckmäßigerweise mit einem (nicht dargestellten) Schlauch aus gummielastischem, beständigem Material vollständig überzogen, und sie kann auf diesem Schlauch im Bereich ihrer beiden Enden mindestens ein ringsum laufendes Dichtungsband (nicht dargestellt) tragen.

Die Dichtungsmanschette 1 weist eine Arretierungsvorrichtung 4 mit einem Rastorgan auf, dessen Aufgabe es ist, sie nach ihrem erfolgten Aufweiten im aufgeweiteten Zustand auf Dauer zu halten. Diese Arretierungsvorrichtung 4 besteht aus einem breiten, am innenliegenden Bandende 2 in umfangsrichtung vorgesehenen Schlitz 5, dessen beide Längskanten 6 und 7 gleich ausgebildete Zahnreihen 8 und 9 tragen, aus einem Spannritzel 10, einem Führungsritzel 11 und einem Sperritzel 12.

Das Spannritzel 10 ist am außenliegenden Bandende 3 drehbar gelagert und greift in die eine Zahnreihe 8 ein. Das Führungsritzel 11 ist im Abstand neben dem Spannritzel 10 ebenfalls am äußeren Bandende 3 drehbar gelagert und kämmt mit der zweiten Zahnreihe 9 des Schlitzes 5, welche der ersten Zahnreihe 8 gegenüberliegt.

Das Sperritzel 12 dient als Rastorgan, das unter der Einwirkung eines Federelements steht und in die Zahnung des Spannritzels 10 eingreift. Dieses Sperritzel 12 liegt auf dem außenliegenden Bandende 3 drehbar auf und kann entlang dessen Oberfläche verschoben werden, wobei die Drehachse des Sperritzels 12 immer senkrecht zur Oberfläche des außenliegenden Bandendes 3 steht. Ein Niederhalter 13 ist mit zwei Stiften 14, 15 am außenliegenden Bandende 3 befestigt. Er überragt die beiden Längskanten 6 und 7 des Schlitzes 5, überdeckt teilweise das Sperritzel 12 und dient zu dessen Führung bei seiner Verschiebung.

Das Spannritzel 10, das Führungsritzel 11 und das Sperritzel 12 besitzen die gleiche Zähnezahl. Die Verbindungslinie 16 der Drehachsen von Spannritzel 10 und Führungsritzel 11 stehen senkrecht zur Längsachse des Schlitzes 5.

Das Spannritzel 10 ist höher als das Führungsritzel 11 und das Sperritzel 12, und überragt diese in axialer Richtung um wenigstens das Doppelte. Dies ermöglicht einer Betätigungsvorrichtung (nicht gezeichnet) - etwa in Gestalt einer Steckaufnahme eines Schraubwerkzeuges von einem Drehschrauber - das Spannritzel 10 zu ergreifen und anzutreiben, wodurch das Aufweiten der Dichtungsinnenmanschette 1 bewirkt wird. Dieses Aufweiten kann aber auch mit einem in die Dichtungsinnenmanschette eingeführten aufpumpbaren Luftsack geschehen, in diesem Fall sind Spannritzel 10, Führungsritzel 11 und Sperritzel 12 gleich hoch.

Bei dem Federelement, unter dessen Einwirkung das Sperritzel 12 steht, handelt es sich um eine U-förmig gebogene Spannfeder 17, die am außenliegenden Bandende 3, nämlich am zum Beispiel angenieteten Stift 15, befestigt ist, wozu sie eine Öse 18 trägt. Mit ihrem freien Ende, welches rechtwinklig abgebogen ist, greift die Spannfeder 17 in eine zentrische Bohrung im Sperritzel 12 ein.

Die Spannfeder 17 ist um den Achsstummel 20 des Führungsritzels 11 geschlungen, was bewirkt, daß sie das Sperritzel 12 während seiner Verschiebungen dauernd im Eingriff mit dem Führungsritzel 11 hält und eine Zwangsführung des Sperritzels 12 als Planetenrad um das Führungsritzel 11 herstellt. Zugleich drückt die Spannfeder 17 das Sperritzel 12 federnd in den Zwischenraum 21 zwischen dem Spannritzel 10 und dem Führungsritzel 11, welcher kleiner ist als der Durchmesser des Fußkreises 22 des Sperritzels 12.

Die Funktion und die Wirkungsweise der Arretierungsvorrichtung ist folgende:

Durch Drehen bewegt sich das Spannritzel 10 an der Zahnreihe 8 des innenliegenden Bandendes entlang und verschiebt dabei das äußere Bandende 3.

Da die Vorrichtung auf dem außenliegenden Bandende 3 montiert ist, bewegt sich die gesamte Vorrichtung ebenfalls relativ zum innenliegenden Bandende 2. Dabei rollt das Führungsritzel 11 zwangsweise an der zweiten Zahnreihe 9 entlang ab. Durch die feste Kopplung zwischen Führungsritzel 11 und Sperritzel 12 wird das Sperritzel 12 ebenfalls zu einer Drehbewegung gezwungen.

Das Sperritzel 12 dreht sich also zwangsweise mit gleichem Drehsinn wie das Spannritzel 10, weshalb diese beiden Ritzel während ihrer Bewegung nicht im Eingriff bleiben können.

Wird versucht, das Spannritzel 10 in Sperrichtung zu drehen, so kommt es in den Eingriffspunkten zwischen dem Spannritzel 10 und dem Sperritzel 12, sowie zwischen dem Führungsritzel 11 und dem Sperritzel 12 zu entgegengesetzten Kräften, die sich blockieren. Der Mechanismus hält die beiden Bandenden 2 und 3 also in ihrer gegenwärtigen Position.

Soll das Spannritzel 10 in Spannrichtung gedreht werden, dann machen die geometrischen Verhältnisse der Arretierungsvorrichtung ein Ausweichen des Sperrritzels 12 gegenüber dem Spannritzel 10 möglich: Das Spannritzel 10 und das Sperritzel 12 drehen sich gleichsinnig, wodurch das Sperritzel 12 gegen die Federkraft der Spannfeder 17 aus dem Eingriff mit dem Spannritzel 10 gedrückt wird und nach einer Versetzung um jeweils einen Zahn wieder in den Eingriff mit dem Spannritzel 10 springt. Während der Verlagerung der Drehachse des Sperritzels 12 drehen sich das Führungsritzel 11 und das Spannritzel 12 weiterhin gegensinnig und bleiben im Eingriff.

Bei einer Umdrehung des Spannritzels 10 arretiert also jeder Zahn des Spannritzels 10 einmal am Eingriffspunkt. Gleichzeitig dreht sich das Sperritzel 12 und arretiert ebenfalls entsprechend der Zähnezahl des Führungsritzels 11. Da es sich um ein Versetzen der Zähne - nicht um ein Abrollen - im Eingriffspunkt handelt und die Bewegung der Zähne entgegengesetzt sind, addiert sich die Zahl der Rasterstufen.

Dieser Mechanismus weist somit gegenüber bekannten Vorrichtungen die doppelte - bzw. je nach Geometrie - eine vielfache Anzahl von Rasterstufen auf.

### Zusammenstellung der Bezugszeichen

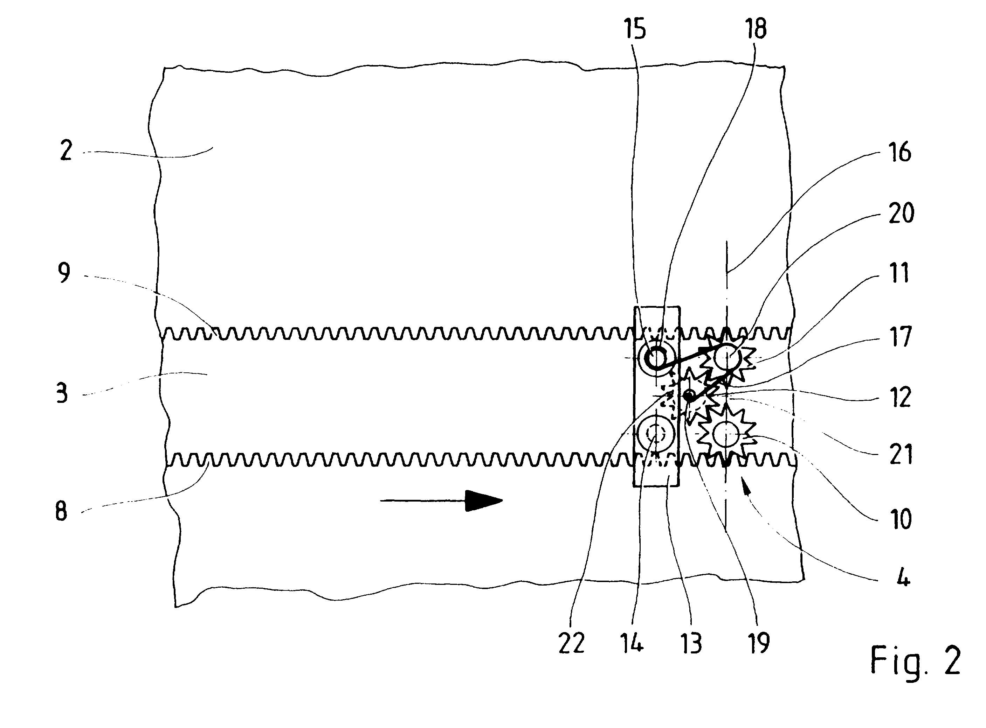

- 1: Dichtungsinnenmanschette
- 2: Bandende (innenliegendes)
- 3: Bandende (außenliegendes)
- 4: Arretierungsvorrichtung (siehe Figur 2)
- 5: Schlitz
- 6: Längskante (erste)
- 7: Längskante (zweite)
- 8: Zahnreihe (erste)
- 9: Zahnreihe (zweite)
- 10: Spannritzel
- 11: Führungsritzel
- 12: Sperritzel
- 13: Niederhalter
- 14: Stift
- 15: Stift
- 16: Verbindungslinie
- 17: Spannfeder
- 18: Öse
- 19: (freies) Ende
- 20: Achsstummel
- 21: Zwischenraum
- 22: Fußkreis

## Patentansprüche

1. Dichtungsinnenmanschette (1) zum Einsetzen in Rohre zwecks Abdichtung von Leckstellen, bestehend aus einem ringförmig zusammengebogenen, aufweitbaren Band aus Stahlblech, dessen Bandenden (2,3) sich in Umfangsrichtung überlappen,
- mit wenigstens einer Arretierungsvorrichtung (4) in Gestalt eines am innenliegenden Bandende (2) in Umfangsrichtung angeordneten Schlitzes (5), dessen eine Längskante (6) eine Zahnreihe (8) trägt, und
- einem am außenliegenden Bandende (3) drehbar gelagerten Spannritzel (10), welches in die Zahnreihe (8) eingreift, sowie
- einem Rastorgan, das unter Einwirkung eines Federelementes steht und in die Zahnung des Spannritzels (10) eingreift,
**gekennzeichnet** durch folgende Merkmale:
- eine zweite Zahnreihe (9) an der zweiten Längskante (7) des Schlitzes (5), welche der ersten Zahnreihe (8) gegenüberliegt,
- ein Führungsritzel (11), das im Abstand neben dem Spannritzel (10) am außenliegenden Bandende (3) drehbar gelagert ist und mit der zweiten Zahnreihe (9) kämmt,
- ein Sperritzel (12) als Rastorgan, welches neben dem Spannritzel (10) und dem Führungsritzel (11) auf dem außenliegenden Bandende (3) drehbar und verschiebbar angeordnet ist,
- eine Spannfeder (17) als Federelement, die am außenliegenden Bandende (3) befestigt ist und mit ihrem freien Ende (19) an der Drehachse des Sperritzels (12) angreift,
- die Spannfeder (17) hält das Sperritzel (12) im Eingriff mit dem Führungsritzel (11),
- die Spannfeder (17) drückt das Sperritzel (12) in den Zwischenraum (21) zwischen Spannritzel (10) und Führungsritzel (11).

2. Dichtungsinnenmanschette nach Anspruch 1, **gekennzeichnet** durch einen Niederhalter (13), der am außenliegenden Bandende (3) befestigt ist, der die Längskanten (6, 7) des Schlitzes (5) übergreift und unter welchem das Sperritzel (12) verschiebbar ist.

3. Dichtungsinnenmanschette nach Anspruch 1 oder 2, dadurch **gekennzeichnet,** daß Spannritzel (10), Führungsritzel (11) und das Sperritzel (12) gleiche Zähnezahlen aufweisen.

4. Dichtungsinnenmanschette nach einem der Ansprüche 1 bis 3, dadurch **gekennzeichnet,** daß die Verbindungslinie (16) der Drehachsen von Spannritzel (10) und Führungsritzel (11) senkrecht zur Längsachse des Schlitzes (5) steht.

5. Dichtungsinnenmanschette nach einem der Ansprüche 1 bis 4, dadurch **gekennzeichnet,** daß das Spannritzel (10) um wenigstens das Doppelte das Führungsritzel (11) und das Sperritzel (12) überragt.

## Claims

1. Sealing inner sleeve (1) for insertion into pipes for the purpose of sealing leaks, consisting of an expansible sheet-steel strip bent into a ring shape, the ends (2, 3) of which strip overlap one another in the circumferential direction,
- having at least one arresting device (4) in the form of a slot (5) arranged in the circumferential direction on the inner-lying end (2) of the strip, one longitudinal edge (6) of which slot has a row of teeth (8), and
- having a clamping pinion (10) rotatably mounted on the outer-lying end (3) of the strip, which pinion (10) engages the row of teeth (8), and
- having a locking means which is acted upon by a spring element and engages the teeth of the clamping pinion (10),
characterised by the following features:
- a second row of teeth (9) on the second longitudinal edge (7) of the slot (5), which second row lies opposite the first row of teeth (8),
- a guide pinion (11) which is rotatably mounted on the outer-lying end (3) of the strip next to the clamping pinion (10) and at a distance therefrom and meshes with the second row of teeth (9),
- a blocking pinion (12) as locking means, which is rotatably and displaceably arranged next to the clamping pinion (10) and the guide pinion (11) on the outer-lying end (3) of the strip,
- a tension spring (17) as the spring element, which is attached to the outer-lying end (3) of the strip and the free end (19) of which engages the rotational axis of the blocking pinion (12),
- the tension spring (17) holds the blocking pinion (12) in engagement with the guide pinion (11),
- the tension spring (17) presses the blocking pinion (12) into the interspace (21) between the clamping pinion (10) and the guide pinion (11).

2. Sealing inner sleeve according to claim 1, characterised by a holding-down device (13), which is attached to the outer-lying end (3) of the strip, which projects over the longitudinal edges (6, 7) of the slot (5) and below which the blocking pinion (12) can be displaced.

3. Sealing inner sleeve according to claim 1 or 2, characterised in that the clamping pinion (10), the guide pinion (11) and the blocking pinion (12) have the same numbers of teeth.

4. Sealing inner sleeve according to any one of claims 1 to 3, characterised in that a line (16) connecting the rotational axes of clamping pinion (10) and guide pinion (11) lies perpendicular to the longitudinal axis of the slot (5).

5. Sealing inner sleeve according to any one of claims 1 to 4, characterised in that the clamping pinion (10) projects to a height at least twice that of the guide pinion (11) and the blocking pinion (12).

## Revendications

1. Manchette interne d'étanchéité (1) à installer dans des tuyaux aux fins d'étanchéité de points de fuite, constituée d'un ruban en tôle d'acier cintré en anneau capable de s'élargir, dont les extrémités (2, 3) se chevauchent dans le sens périphérique,
- comportant au moins un dispositif de blocage (4) sous la forme d'une fente (5) disposée dans le sens périphérique sur l'extrémité intérieure (2) du ruban, dont l'une des arêtes longitudinales (6) comporte une série de dents (8), et
- un pignon de serrage (10) monté capable de rotation sur l'extrémité extérieure (3) du ruban, lequel pignon s'engrène avec la série de dents (8), ainsi que
- un organe d'encliquetage commandé par un élément élastique et s'engrenant avec la denture du pignon de serrage (10),
caractérisée par les particularités suivantes:
- une seconde série de dents (9) sur la seconde arête longitudinale (7) de la fente (5), située en vis à vis de la première série de dents (8),
- un pignon de guidage (11) monté capable de rotation sur l'extrémité extérieure (3) du ruban, à distance à côté du pignon de serrage (10), et qui s'engrène sur la seconde série de dents (9),
- un pignon d'arrêt (12), en tant qu'organe d'encliquetage, monté capable de rotation et de translation sur l'extrémité extérieure (3) du ruban, à proximité du pignon de serrage (10) et du pignon de guidage (11),
- un ressort de serrage (17), en tant qu'élément élastique, fixé sur l'extrémité extérieure (3) du ruban et qui, par son extrémité libre (19), vient en prise avec l'axe de rotation du pignon d'arrêt (12),
- le ressort de serrage (17) maintient le pignon d'arrêt (12) en prise avec le pignon de guidage (11),
- le ressort de serrage (17) presse le pignon d'arrêt (12) dans l'interstice (21) situé entre le pignon de serrage (10) et le pignon de guidage (11).

2. Manchette d'étanchéité (1) selon la revendication 1, caractérisée par un élément d'appui (13), qui est fixé sur l'extrémité extérieure (3) du ruban et enjambe les arêtes longitudinales (6, 7) de la fente (5), et sous lequel le pignon d'arrêt (12) peut se déplacer.

3. Manchette d'étanchéité (1) selon l'une des revendications 1 et 2, caractérisée en ce que le pignon de serrage (10), le pignon de guidage (11) et le pignon d'arrêt (12) comportent le même nombre de dents.

4. Manchette d'étanchéité (1) selon l'une des revendications 1 à 3, caractérisée en ce que la ligne qui relie les axes de rotation du pignon de serrage (10) et du pignon de guidage (11) est perpendiculaire à l'axe longitudinal de la fente (5).

5. Manchette d'étanchéité (1) selon l'une des revendications 1 à 4, caractérisée en ce que le pignon de serrage (10) dépasse d'au moins le double le pignon de guidage (11) et le pignon d'arrêt (12).
